# FASCICULE DE BREVET EUROPEEN

(11) **EP 3 834 592 B1**
(45) Date de publication et mention de la délivrance du brevet: **16.08.2023**
(21) Numéro de dépôt: 20212473.1
(22) Date de dépôt: 08.12.2020
(51) Int. Cl.: A01B 17/00, A01B 63/32, A01B 3/46, A01B 3/42

(54) **CHARRUE AVEC AU MOINS UN DISPOSITIF ADDITIONNEL DE TRAVAIL DU SOL**
PFLUG MIT MINDESTENS EINER ZUSÄTZLICHEN BODENBEARBEITUNGSEINRICHTUNG
PLOUGH WITH AT LEAST ONE ADDITIONAL SOIL WORKING DEVICE

(30) Priorité: 11.12.2019 FR 1914175
(43) Date de publication de la demande: 16.06.2021
(73) Titulaire: Kuhn-Huard S.A.S, 44110 Chateaubriant (FR)
(72) Inventeur: GAUTRON, Herrman, 44670 SAINT JULIEN DE VOUVANTES (FR); BOUTIN, Gérald, 44520 ISSE (FR)
(74) Mandataire: Cabinet Nuss

(56) Documents cités:
- EP-A2- 2 793 542
- FR-A1- 2 865 101
- FR-A1- 2 917 568

## Description

La présente invention concerne le domaine du machinisme agricole, plus particulièrement les équipements de travail du sol attelés à un tracteur en utilisation, et a pour objet une charrue portée ou semi-portée avec un dispositif embarqué additionnel de travail du sol.

Communément, le labour a quatre fonctions :
- ameublir la couche arable pour accélérer la vitesse de ressuyage (puisque la pénétration de l'air et de la chaleur est améliorée) et faciliter son exploitation par les racines,
- enfouir et mélanger au sol les résidus de récolte pour qu'ils ne gênent pas la préparation du lit de semences et le semis,
- détruire par enfouissement la végétation et certains parasites,
- faciliter la préparation du lit de semences.

Puis, pour éviter le dessèchement du sol labouré, une action supplémentaire de travail du sol (en plus du labourage par les corps de labour) peut être prévue, laquelle permet de rappuyer le sol et d'en parfaire l'émiettement (réduction de la taille des mottes et formation de terre fine) pour assurer un meilleur contact des graines et des particules de terre. Un dispositif de travail du sol tel qu'un rouleau est ainsi utilisé directement derrière la charrue, ce rouleau étant parfois couplé à la charrue, voire embarqué sur cette dernière.

Une charrue avec un dispositif additionnel de travail du sol ou rouleau est connue par le document EP 2 793 542 (correspondant à WO-A-2013 091608). Le rouleau est conçu pour être utilisé avec la charrue, il roule la bande de terre qui vient d'être retournée. Les anneaux ou roues sont montés par paires sur une poutre qui est fixée via des bras de liaison au bâti de la charrue, la poutre étant sensiblement parallèle au bâti de la charrue et l'ensemble structurel formé par le bâti, la poutre et les bras articulés constituant un (grand) parallélogramme déformable.

Chaque bras de liaison est constitué d'une branche ou barre supérieure et d'une branche ou barre inférieure formant ensemble un (petit) parallélogramme déformable. Chacun de ces parallélogrammes est commandé par un vérin de rappui (du type vérin hydraulique double effet) qui permet de contrôler la pression du rouleau au sol. Chaque vérin est arrangé à l'extérieur du parallélogramme concerné et agit de manière centrée au niveau des extrémités des deux branches reliées au bâti, la déformation symétrique du parallélogramme (pour un labour à droite ou à gauche) étant réalisée par l'intermédiaire d'un dispositif mécanique comprenant une biellette et des cames en forme de plaques de butée. Il en résulte une construction complexe et pouvant être soumise localement à des sollicitations élevées.

La charrue de ce document EP est réversible et les vérins de rappui doivent permettre le labour alternatif des corps gauches et droits, et proposer aussi une position neutre (plutôt horizontale) pour le transport. Les vérins de rappui doivent également permettre l'escamotage du rouleau en cas d'obstacle.

En fonction de la profondeur de labour, l'utilisateur adapte hydrauliquement la pression d'appui du rouleau sur le sol pour obtenir une bonne action de roulage. Il doit donc effectuer un réglage de longueur du vérin de rappui et doit s'assurer que le résultat est acceptable après quelques mètres de travail. Si la pénétration du rouleau est trop profonde ou au contraire trop superficielle, l'utilisateur devra corriger le réglage de manière à obtenir un rappuyage idéal du lit de semences. Un inconvénient supplémentaire est qu'une sollicitation excessive de la structure de la charrue peut se produire en cas de pression non maîtrisée ou de variation d'aplomb de la charrue.

A chaque modification de profondeur de labour, l'utilisateur doit donc ajuster le réglage du rouleau et vérifier si le rappui est correct. En pratique, de tels réglages sont fastidieux et la plupart des utilisateurs n'adaptent pas le réglage de la pression de rappui du rouleau. Par ailleurs, en cas de parcelle au sol hétérogène, l'utilisateur est contraint à un compromis qui n'est alors idéal pour aucun des types de sols rencontrés durant le labour.

Le but de l'invention est de pallier les limitations de l'état de la technique précité et notamment de fournir une charrue avec un dispositif additionnel de travail du sol du type rouleau dont l'appui au sol se fait à pression constante quelle que soit la profondeur de labour de la charrue, même en cas d'ondulations ou de dénivellations du sol de la parcelle à labourer et donc indépendamment de la position du rouleau. Idéalement, l'invention devra permettre de fournir un tel dispositif additionnel sans nécessiter aucun réglage de la part de l'utilisateur et en mettant en oeuvre une construction simple.

A cet effet, l'invention a pour objet une charrue selon la revendication indépendante 1.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
[Fig. 1] est une vue de dessus d'une charrue portée réversible comportant un dispositif additionnel embarqué de travail du sol (rouleau) selon un premier mode de réalisation de l'invention ;
[Fig. 2] est une vue en perspective de la charrue portée réversible de la figure 1 (charrue représentée en position labour à droite) ;
[Fig. 3] est une vue de dessus d'une charrue semi-portée équipée de deux dispositifs additionnels de travail du sol (rouleaux) selon un deuxième mode de réalisation de l'invention (un rouleau est associé à chacune des deux parties de la charrue) ;
[Fig. 4A] et
[Fig. 4B] sont des vues en élévation latérale d'un attelage [tracteur + charrue portée réversible selon la figure 2] en sortie de sillon (Fig. 4A) et en entrée de sillon (Fig. 4B) ;
[Fig. 5A] et
[Fig. 5B] sont des vues arrières au niveau d'un bras de liaison de la charrue portée réversible des figures 1, 2 et 4, illustrant le positionnement d'une paire de roues faisant partie du rouleau lorsque la profondeur de labour PL est importante (Fig. 5A) et faible (Fig. 5B) ;
[Fig. 6] est une vue partielle de l'objet représenté figure 5, montrant notamment plus précisément la structure du bras de liaison ;
[Fig. 7A] et
[Fig. 7B] sont des vues en coupe selon un plan longitudinal d'une première variante constructive d'un actionneur pouvant faire partie du bras de liaison des figures 5 et 6 (charrue réversible), les deux vérins double effet à double tige étant dans des états différents entre les deux figures 7 ;
[Fig. 8] est une vue en coupe selon un plan longitudinal d'une seconde variante constructive d'un actionneur pouvant faire partie d'un bras de liaison (charrue non réversible), et,
[Fig. 9] est une représentation schématique d'un exemple de réalisation d'un circuit de commande hydraulique des différents actionneurs d'un dispositif additionnel de travail du sol d'une charrue telle que représentée sur les figures 1 ou 2 notamment.

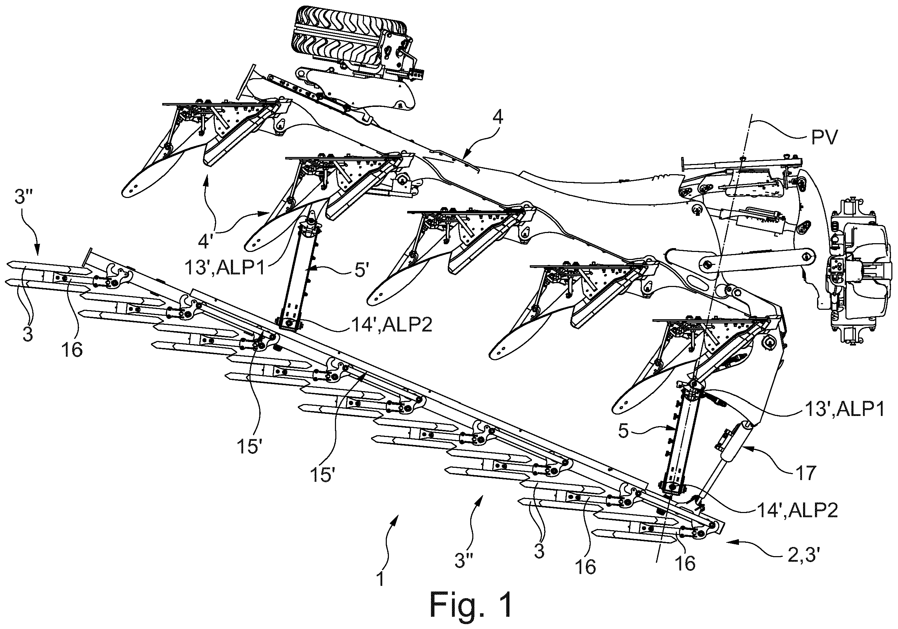

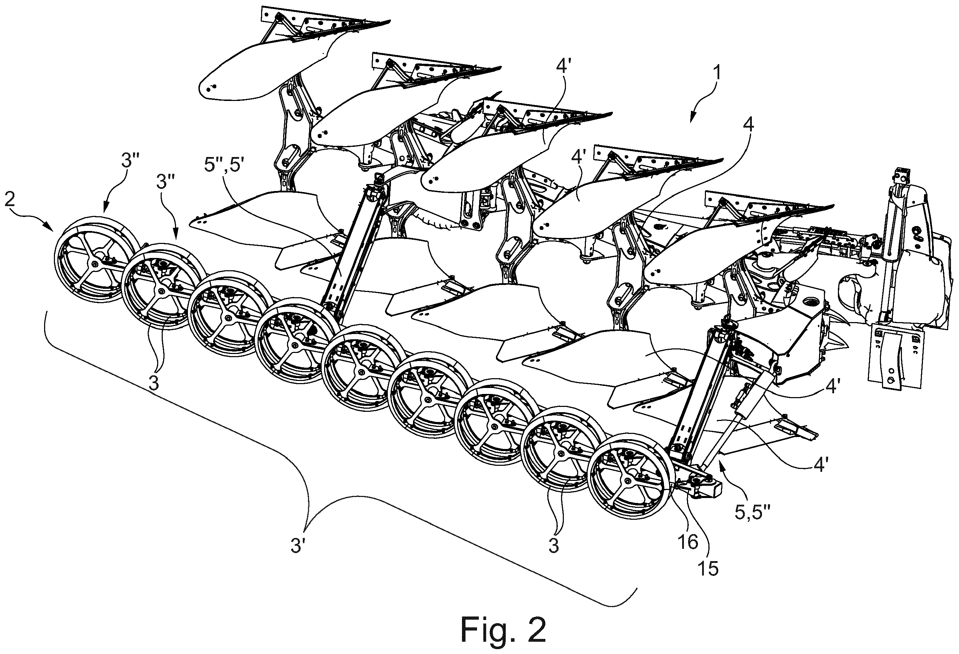

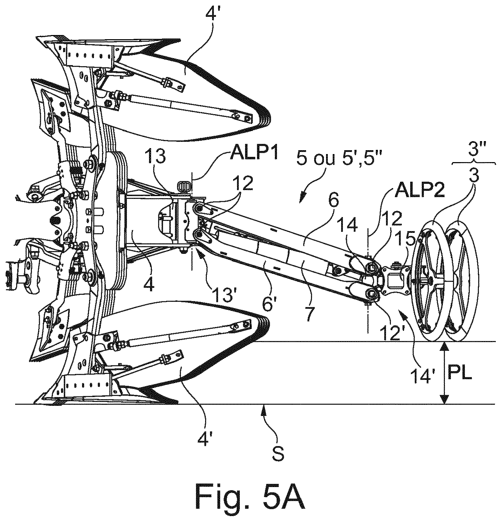

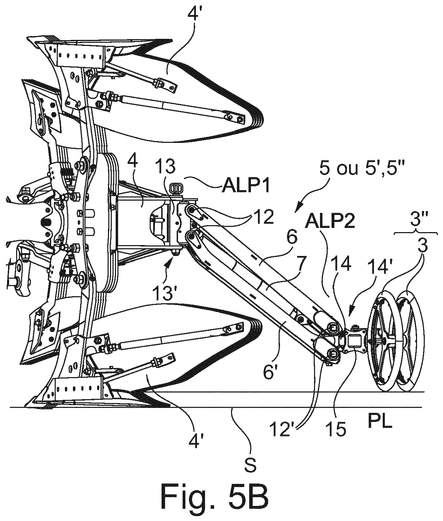

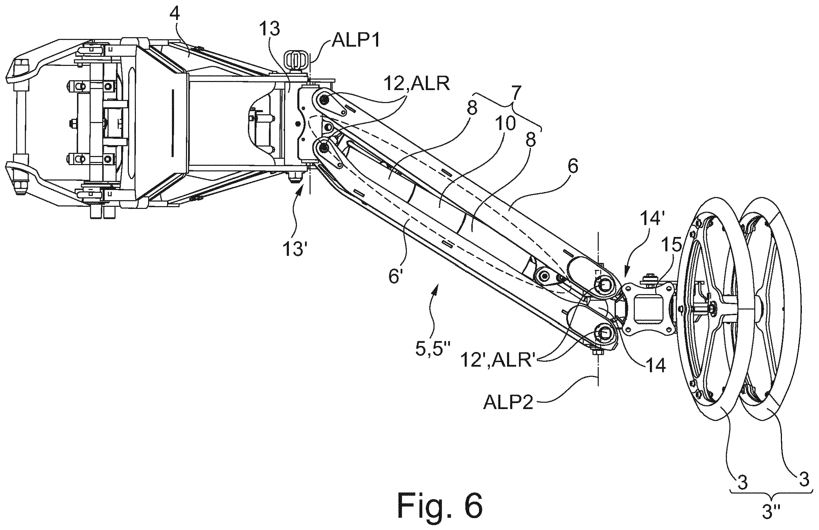

Les figures 1 à 4, et de manière partielle au moins les figures 5 et 6, illustrent une charrue 1 comportant au moins un dispositif additionnel 2 de travail du sol S, lequel intègre un ensemble 3' de moyens 3 de roulement ou de roulage qui forme rouleau et qui est relié au bâti 4 longitudinal de la charrue 1 par au moins deux bras de liaison 5, 5' commandés.

Chaque bras de liaison 5, 5' comprend, d'une part, au moins deux branches 6 et 6' montées articulées et arrangées de manière à constituer un parallélogramme 5" déformable par le biais d'articulations angulaires 12, 12' et est agencé selon un plan vertical PV en position de travail du sol S de la charrue 1, et, d'autre part, au moins un actionneur 7 linéaire conçu et agencé pour pouvoir réaliser par déplacement des branches 6 et 6' des configurations variées du parallélogramme 5", correspondant à des positions variées respectives du dispositif additionnel 2 de travail du sol.

Conformément à l'invention, le ou chaque actionneur 7 consiste en au moins un vérin double effet 8 à double tige 9, 9' et avec un espace borgne 10, ledit ou chaque vérin 8 comportant deux chambres 11, 11' avec des sections de travail équivalentes, préférentiellement sensiblement identiques, ledit actionneur 7 formant vérin de rappui pour le rouleau 3' considéré (chaque rouleau 3' comportant ainsi au moins deux vérins de rappui 7).

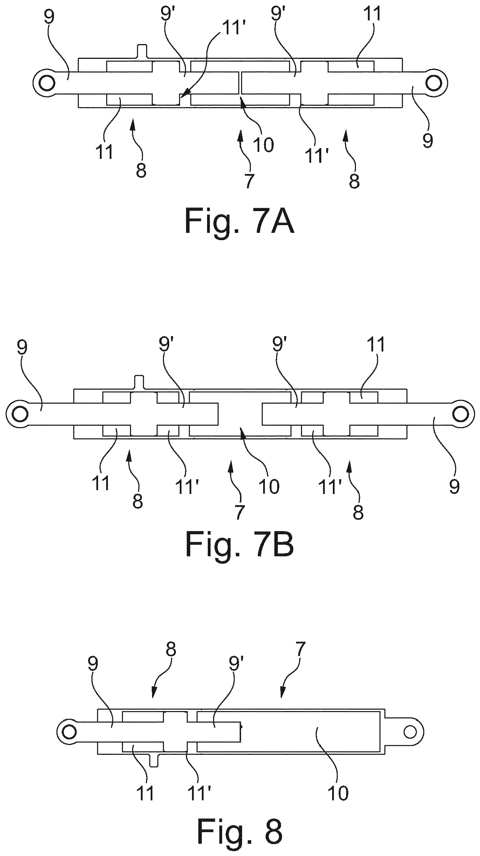

Comme le montrent plus précisément à titre d'exemples les figures 7 et 8, l'espace borgne 10 est un volume non débouchant sur l'extérieur, intégré au vérin 8 (le cas échéant commun aux deux vérins de l'actionneur et séparant ces derniers) et dans lequel la tige 9' non reliée peut s'étendre librement (il forme un espace de dégagement pour cette tige).

Grâce à la mise en oeuvre d'un actionneur 7, tel que défini ci-dessus, le couplage articulé et à efforts maîtrisés (entre le ou chaque rouleau 3' et le bâti 4) fourni par l'invention, permet de garantir au niveau du ou de chaque rouleau 3' une pression d'appui constante quelle que soit la profondeur de labour PL, et une adaptation automatique en présence d'ondulations ou de dénivellations de terrain, permettant la préservation de la structure du sol. Avec un tel actionneur 7, même une commande inopinée d'excès d'aplomb, suite à une erreur accidentelle de réglage par exemple, n'entraine pas de surcharge sur la partie avant du rouleau 3'. Le réglage de l'aplomb permet à la charrue 1, notamment à ses étançons, d'être perpendiculaire(s) au sol S alors que le tracteur 21 circule avec deux roues dans la raie de labour.

Outre le confort d'utilisation amélioré du fait de la suppression des opérations de réglage et de contrôle répétées pour l'utilisateur, la maîtrise des efforts à fournir pour le rappui, possible grâce à l'invention, permet de limiter les contraintes sur le bâti 4 de la charrue 1, et de manière plus globale sur la totalité de la structure de cette dernière et sur son dispositif d'attelage avec le tracteur 21.

Les deux chambres 11 et 11' de chaque actionneur 7 sous forme de vérin double effet ayant des volumes identiques, ce dernier permet de positionner le rouleau 3' concerné avec une force égale de rappui au sol pour le labour à droite ou à gauche. Leur dimensionnement permet aussi d'assurer une force de rappui équivalente sur chaque rouleau 3'.

Dans un souci de simplification constructive, il est avantageusement prévu que ledit au moins un actionneur 7 de chaque bras de liaison 5, 5' est monté de manière à relier directement le bâti 4 à l'une 6 des branches 6, 6' faisant partie du bras de liaison 5, 5' considéré.

Selon l'invention, ledit au moins un actionneur 7 de chaque bras de liaison 5, 5' est monté dans le parallélogramme déformable 5" constituant ledit bras 5, 5', et s'étend entre les deux branches 6, 6' du bras considéré. Ainsi, cet actionneur est intégré dans la structure même du bras concerné et est arrangé à l'intérieur de la délimitation du parallélogramme défini par ce dernier, et en étant sensiblement coplanaire avec les branches précitées.

Selon une première caractéristique de l'invention, autorisant une simplification constructive par regroupement des sites d'assemblages articulés et optimisant l'effet de l'effort fourni par le ou chaque vérin, ledit au moins un actionneur 7 de chaque bras de liaison 5, 5' est solidarisé avec une des articulations 12, 12' du parallélogramme déformable 5" constituant ledit bras 5, 5'. Ces articulations angulaires (c'est-à-dire dire situées au niveau des angles) du parallélogramme 5" comprennent deux articulations 12 reliant chacune une extrémité des branches 6 et 6' au bâti 4 et deux articulations 12' reliant chacune l'autre extrémité desdites branches au rouleau 3', à chaque fois par le biais d'une liaison articulée supplémentaire 13' ou 14'.

En accord avec une construction avantageuse de chacun des bras de liaison 5, 5', ressortant des figures 5 et 6, ledit au moins un actionneur 7 de chaque bras de liaison 5, 5' est solidarisé, à l'une de ses extrémités, avec une des articulations 12, 12' du parallélogramme déformable 5" constituant ledit bras, préférentiellement une des articulations 12 situées du côté du bâti longitudinal 4 et, à son autre extrémité, avec la branche 6 du parallélogramme 5" non concernée par l'articulation 12 précitée, préférentiellement du côté ou à proximité du rouleau 3', avant son articulation 12' avec ledit rouleau 3'. Plus l'actionneur linéaire allongé 7 est fixé à proximité de l'articulation 12' (côté rouleau 3'), plus l'effet de bras de levier sera important. Avantageusement, cet actionneur 7 peut s'étendre pratiquement selon une diagonale du parallélogramme 5".

Préférentiellement, les deux branches 6 et 6' de chaque bras de liaison 5, 5' sont reliées, à leurs extrémités opposées respectives, par des articulations rotatoires 12, 12', d'un côté, à un palier 13 d'une liaison pivot 13' avec le bâti 4 et, du côté opposé, à un palier 14 d'une liaison pivot 14' avec une poutre 15 portant les moyens 3 de roulement ou de roulage, les axes ALP1, ALP2 des deux liaisons pivots 13' et 14' et les axes ALR, ALR' des quatre articulations rotatoires 12, 12' étant mutuellement perpendiculaires. Selon une construction alternative, les liaisons 13' et 14' peuvent consister en des liaisons rotule.

Conformément à un mode de réalisation très favorable de dispositif de travail additionnel 2 et de son couplage articulé et commandé avec le bâti 4, et comme le montrent les figures 1 à 6, les différents moyens 3 de roulement ou de roulage constituant le ou les rouleau(x) 3' se présentent sous la forme de roues discoïdales ou annulaires, éventuellement arrangées ou non par paires 3" ou triades, dont chacune est montée (par exemple par l'intermédiaire d'une barre de jonction 16) sur une poutre 15 avec un décalage longitudinal entre les différentes roues 3, ou le cas échéant entre le différentes paires 3" ou triades. La poutre 15 concernée peut le cas échéant être équipée d'une tringlerie de guidage et d'orientation des roues 3.

Selon une alternative non représentée, les moyens de roulement peuvent être des roues 3 individuelles disposées avec un décalage longitudinal entre elles.

Selon une autre alternative non représentée, les moyens de roulement 3 peuvent être formés de plusieurs arrangements de trois (triades) ou plus de roues 3.

La poutre 15 est avantageusement reliée (préférentiellement à proximité de chacune de ses deux extrémités) par deux bras de liaison 5 et 5' articulés et commandés au bâti 4, ce dernier formant ainsi avec lesdits deux bras de liaison 5 et 5' et la poutre 15, un parallélogramme déformable dont la conformation est commandée par un actionneur linéaire 17.

Préférentiellement, la barre de jonction 16 de chaque roue 3, ou de chaque triade ou paire de roues 3", est reliée via un pivot à axe vertical (par rapport au sol S en position d'utilisation de la charrue 1) à une tringlerie 15' de guidage/commande qui assure l'alignement des roues 3 par rapport à la direction d'avance A de la charrue 1 en utilisation, à l'instar des contre seps des corps de labour 4'. Les roues 3 arrangées individuellement, par paires ou par triades, sont suiveuses et s'alignent par rapport à la direction d'avance A de la charrue 1.

Le couplage articulé du dispositif de travail additionnel 2 avec le bâti 4 est configuré et agencé de manière à être compatible avec les différentes sécurités mécaniques, opérationnelles et de mouvement de la charrue 1. Il autorise en outre l'adaptation automatique du ou de chaque rouleau 3' à la largeur de travail réglable de la charrue 1 en utilisation.

En position de transport, le ou chaque rouleau 3' se retrouve sur la charrue 1 et le vérin de pliage 17 est en position rétractée maximale pour limiter la hauteur totale (le ou chaque rouleau 3' avec la ou sa poutre 15 associée est rapproché du bâti 4 et donc des corps de labour 4').

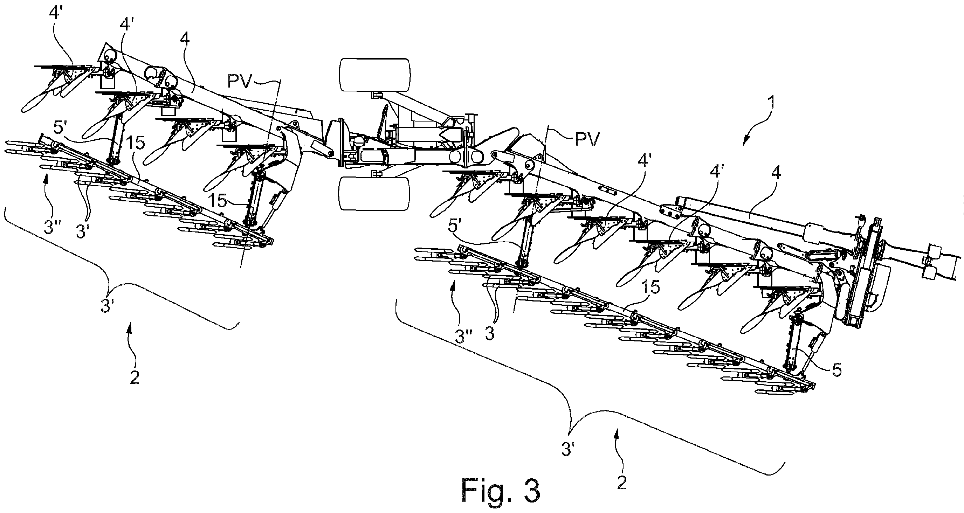

Les charrues 1 équipées d'un ou plusieurs ensemble(s) 3' de moyens de roulement 3 peuvent être de différents types, à savoir, d'un seul tenant (figures 1, 2, 4) ou en plusieurs segments (figure 3), réversible ou non réversible (ce dernier type n'étant pas représenté, mais aisément dérivable pour l'homme du métier des figures 1 et 3 notamment - Fig. 1 : charrue 1 portée avec un dispositif de travail additionnel 2 / Fig. 3 : charrue 1 semi-portée avec deux dispositifs de travail additionnels 2, un dispositif 2 étant embarqué sur chaque segment de la charrue 1).

Dans le cas d'une charrue 1 non réversible, chaque actionneur linéaire 7 intégré aux bras de liaison 5, 5' est un (unique) vérin 8 double effet avec une double tige (figure 8).

En variante préférée toutefois, et comme le montrent les figures 1, 2, 4 et 5, la charrue 1 est avantageusement du type réversible.

Dans ce cas, l'actionneur linéaire 7 intégré à chaque bras de liaison 5, 5' consiste en un organe d'actionnement formé de deux vérins double effet 8 à double tige chacun, alignés de manière opposée, montés dans le même corps, partageant un espace borgne 10 commun et comportant chacun deux chambres 11, 11' à sections de travail équivalentes, chaque organe d'actionnement 7 étant relié par les extrémités des deux tiges apparentes 9 des vérins 8 le constituant à des sites d'ancrage correspondants du bras de liaison 5, 5' considéré (cf. figures 6 et 7). La prévision de chambres 11 et 11' à sections de travail équivalentes permet de symétriser l'action de l'organe 7 à deux vérins et de permettre d'aboutir à un rappui égal entre les positions labour à droite et labour à gauche. Chaque vérin 8 comportant deux chambres 11 et 11', l'actionneur 7 dispose de deux chambres pour le labour à gauche et de deux chambres pour le labour à droite.

Avec une telle construction des actionneurs 7, ces derniers peuvent agir de manière similaire et symétrique de part et d'autre d'un plan horizontal passant entre les deux rangées de corps de labour 4' (cf. figures 5A et 5B), en position de travail de la charrue 1 concernée et selon que cette dernière est en position labour à droite ou à gauche, par rapport à la direction d'avance A.

Ces organes d'actionnement 7 intégrant deux vérins double effet 8 combinés constructivement et opérationnellement, permettent de définir trois configurations du parallélogramme 5" de chaque bras de liaison 5, 5' correspondant à trois positions/états du rouleau 3', à savoir : position labour (corps de labour à gauche ou à droite), position escamotée et position spécifique durant le retournement de la charrue 1.

Le retournement de la charrue 1 réversible peut par exemple être détecté par un capteur du type inclinomètre, capteur de proximité ou codeur incrémental et entraîner un retournement automatique du rouleau 3'.

Bien entendu, les actionneurs 7 peuvent être de différentes natures et de types variés (électriques, hydrauliques, pneumatiques), tout en étant dimensionnés pour les fonctions à réaliser.

Toutefois, préférentiellement chaque actionneur 7 est de type hydraulique ou pneumatique et est alimenté par un circuit de commande 18 adapté intégrant un module de régulation 19 et éventuellement un réservoir tampon 20.

L'implantation constructive de l'actionneur 7 telle que décrite précédemment, associée à un tel circuit de commande, permet d'assurer une force verticale d'appui au sol presque constante, et cette valeur de pression de rappui est constante quelle que soit la course du vérin actif considéré.

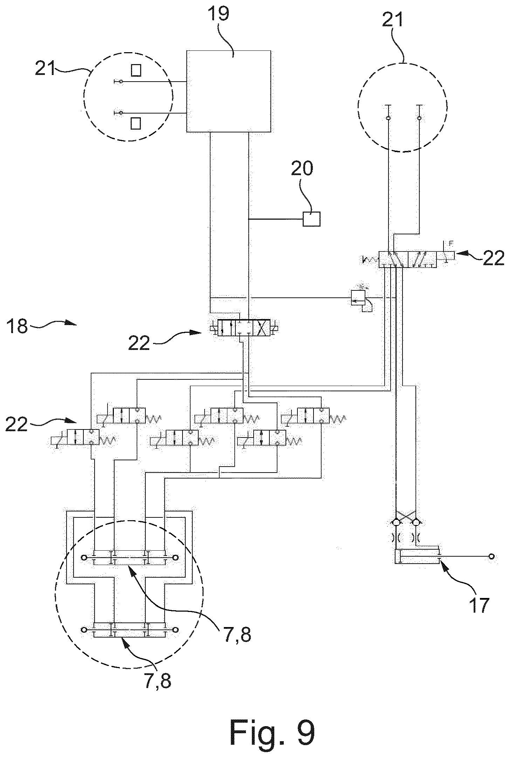

Un exemple de circuit de commande 18 dans le cas de la mise en oeuvre d'actionneurs 7 hydrauliques est représenté figure 9.

Dans ce contexte, le module de régulation 19 est avantageusement configuré pour générer par l'intermédiaire des bras de liaison 5, 5' commandés, une valeur de pression d'appui du ou de chaque rouleau 3' sur le sol S comprise dans une plage de valeurs prédéterminée, préférentiellement sensiblement égale à une valeur de consigne préréglée, le volume de fluide excédentaire présent dans le circuit de commande 18 étant le cas échéant évacué vers le réservoir tampon 20 éventuellement présent ou alors vers le réservoir du tracteur 21. A titre d'exemple, la régulation de la valeur de la pression peut être effectuée grâce à une vanne réglable par l'opérateur. A cet effet, un potentiomètre agissant sur la commande électronique de cette vanne peut être manipulé par l'opérateur.

D'une manière avantageuse, la valeur de consigne est indiquée depuis le tracteur 21. Il peut être envisagé de gérer la valeur de consigne automatiquement via l'électronique lorsqu'au moins le tracteur 21 dispose d'un positionnement type coordonnées GPS. Ainsi, la valeur de consigne pourra s'adapter automatiquement en fonction d'une carte de préconisation chargée dans le terminal du tracteur 21 ou de la charrue 1.

Selon une autre alternative constructive, la valeur de consigne peut être adaptée en fonction des informations reçues par différentes technologies de capteurs (ultrason, caméra). Ces capteurs vont prendre en compte l'aspect du sol S : humidité, texture ou rugosité (taille de mottes) et ils se basent avantageusement sur les informations lues sur le sol retourné au passage précédent.

Le circuit représenté figure 9, embarqué par exemple sur une charrue 1 réversible et alimenté en fluide hydraulique sous pression par le véhicule tracteur 21, peut assurer la commande de deux organes d'actionnement 7 (contrôlant la configuration des parallélogrammes 5" des deux bras de liaison 5 et 5' et intégrant chacun deux vérins 8 double effet du type précité) et du vérin de pliage 17.

Il comporte, outre le module 19, et éventuellement le réservoir 20, également différentes électrovannes 22 contrôlant l'état de chacun des vérins 8 et 17.

Le fonctionnement d'un tel circuit dans le contexte de l'invention est aisément déductible par l'homme du métier à la vue de la représentation symbolique de la figure 9, et ne nécessite de ce fait pas d'explications additionnelles.

En étant couplé au bâti 4 par l'intermédiaire de deux bras de liaison 5 et 5' articulés et commandés, le ou chaque rouleau 3' peut s'incliner pour s'adapter aux dénivellations du terrain, ce avec une force d'appui uniformément répartie et constante.

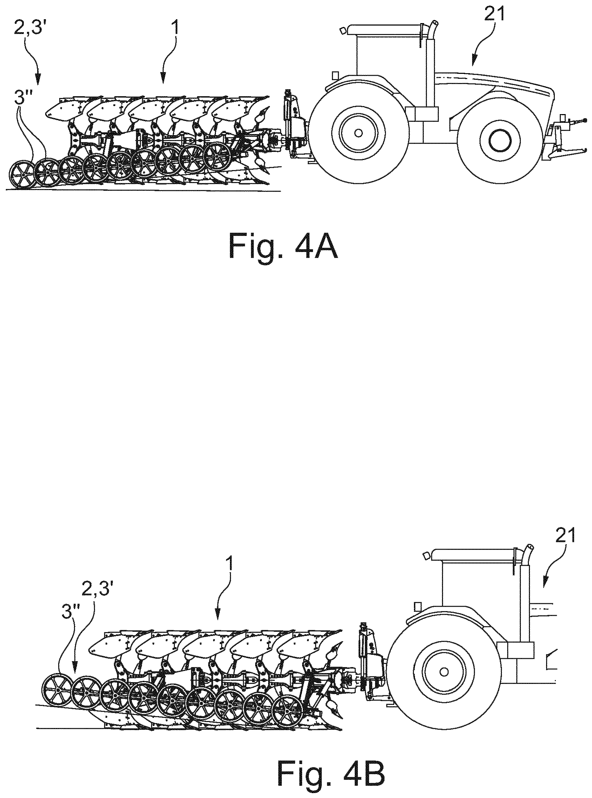

Cette possibilité d'inclinaison est également bénéfique lors de l'entrée en terre (en début de sillon) et lors de la sortie de terre (en fin de sillon), c'est-à-dire lorsque l'avant de la charrue 1 (et donc du rouleau 3') entre en contact avec le sol S avant l'arrière de la charrue 1, et inversement (voir figures 4A et 4B).

Comme le montrent les figures annexées, la charrue 1 peut consister soit en une charrue portée, réversible ou non, comportant un unique rouleau 3', soit en une charrue semi-portée comportant deux rouleaux 3'.

Selon une variante non représentée, la charrue 1 selon l'invention peut également être équipée de plusieurs ensembles 3' de moyens 3 de roulement, ces ensembles 3' appartenant tous à un unique dispositif additionnel 2 de travail du sol, ou chacun à un dispositif 2 distinct (qui sont alors reliés les uns aux autres en cascade à chaque fois par des bras de liaison 5, 5'). Ainsi, une charrue 1 à cinq corps de labour 4', comme représentée sur la fig.1, peut être équipée de deux, voire de trois, rouleaux 3', disposés l'un derrière l'autre et en décalage longitudinal.

Bien entendu, l'invention n'est pas limitée aux modes de réalisation décrits et représentés aux dessins annexées, cependant le domaine de protection de l'invention est défini par la revendication indépendante 1.

## Revendications

1. Charrue (1) comportant au moins un dispositif additionnel (2) de travail du sol (S), lequel intègre un ensemble (3') de moyens (3) de roulement ou de roulage formant rouleau et est relié au bâti (4) longitudinal de la charrue (1) par au moins deux bras de liaison (5, 5') commandés, chaque bras de liaison (5, 5') comprenant, d'une part, au moins deux branches (6 et 6') montées articulées et arrangées de manière à constituer un parallélogramme (5") déformable par le biais d'articulations angulaires (12, 12') et agencé selon un plan vertical (PV) en position de travail du sol (S) de la charrue (1), et, d'autre part, au moins un actionneur (7) linéaire conçu et agencé pour pouvoir réaliser par déplacement des branches (6 et 6') des configurations variées du parallélogramme, correspondant à des positions variées respectives du dispositif additionnel (2) de travail du sol,
le ou chaque actionneur (7) consistant en au moins un vérin double effet, charrue (1) **caractérisée en ce que** le ou chaque vérin double effet (8) est à double tige (9, 9') et avec un espace borgne (10), ledit ou chaque vérin (8) comportant deux chambres (11, 11') avec des sections de travail équivalentes, préférentiellement sensiblement identiques, ledit actionneur (7) formant vérin de rappui pour le rouleau (3') considéré, et **en ce que** ledit au moins un actionneur (7) de chaque bras de liaison (5, 5') est monté dans le parallélogramme déformable (5") constituant ledit bras (5, 5'), et s'étend entre les deux branches (6, 6') du bras (5, 5') considéré.

2. Charrue selon la revendication 1, **caractérisée en ce que** ledit au moins un actionneur (7) de chaque bras de liaison (5, 5') est monté de manière à relier directement le bâti (4) à l'une (6) des branches (6, 6') faisant partie du bras de liaison (5, 5') considéré.

3. Charrue selon l'une quelconque des revendications 1 à 2, **caractérisée en ce que** ledit au moins un actionneur (7) de chaque bras de liaison (5, 5') est solidarisé avec une des articulations (12, 12') du parallélogramme déformable (5") constituant ledit bras (5, 5').

4. Charrue selon l'une quelconque des revendications 1 à 3, **caractérisée en ce que** ledit au moins un actionneur (7) de chaque bras de liaison (5, 5') est solidarisé, à l'une de ses extrémités, avec une des articulations (12, 12') du parallélogramme déformable (5") constituant ledit bras, préférentiellement une des articulations (12) situées du côté du bâti longitudinal (4), et, à son autre extrémité, avec la branche (6) du parallélogramme (5") non concernée par l'articulation (12) précitée, préférentiellement du côté ou à proximité du rouleau (3'), avant son articulation (12') avec ledit rouleau (3').

5. Charrue selon l'une quelconque des revendications 1 à 4, **caractérisée en ce que** les deux branches (6 et 6') de chaque bras de liaison (5, 5') sont reliées, à leurs extrémités opposées respectives, par des articulations rotatoires (12, 12'), d'un côté, à un palier (13) d'une liaison pivot (13') avec le bâti (4) et, du côté opposé, à un palier (14) d'une liaison pivot (14') avec une poutre (15) portant les moyens (3) de roulement ou de roulage, les axes (ALP1, ALP2) des deux liaisons pivots (13' et 14') et les axes (ALR, ALR') des quatre articulations rotatoires (12, 12') étant mutuellement perpendiculaires.

6. Charrue selon l'une quelconque des revendications 1 à 5, **caractérisée en ce que** les différents moyens (3) de roulement ou de roulage constituant le ou les rouleau(x) (3') se présentent sous la forme de roues discoïdales ou annulaires, dont chacune est montée sur une poutre (15) avec un décalage longitudinal entre les différentes roues (3), et **en ce que** cette poutre (15) est reliée par deux bras de liaison (5 et 5') articulés et commandés au bâti (4), ce dernier formant ainsi avec lesdits deux bras de liaison (5 et 5') et la poutre (15), un parallélogramme déformable dont la conformation est commandée par un actionneur linéaire (17).

7. Charrue selon l'une quelconque des revendications 1 à 6, **caractérisée en ce qu'**elle est du type charrue réversible et **en ce que** l'actionneur linéaire (7) intégré à chaque bras de liaison (5, 5') consiste en un organe d'actionnement formé de deux vérins double effet (8) à double tige chacun, alignés de manière opposée, montés dans le même corps, partageant un espace borgne (10) commun et comportant chacun deux chambres (11, 11') à sections de travail équivalentes, chaque organe d'actionnement (7) étant relié par les extrémités des deux tiges apparentes (9) des vérins (8) le constituant à des sites d'ancrage correspondants du bras de liaison (5, 5') considéré.

8. Charrue selon l'une quelconque des revendications 1 à 7, **caractérisée en ce que** chaque actionneur (7) est de type hydraulique ou pneumatique et est alimenté par un circuit de commande (18) adapté intégrant un module de régulation (19).

9. Charrue selon la revendication 8, **caractérisée en ce que** le module de régulation (19) est configuré pour générer par l'intermédiaire des bras de liaison (5, 5') commandés, une valeur de pression d'appui du ou de chaque rouleau (3') sur le sol (S) comprise dans une plage de valeurs prédéterminée, préférentiellement sensiblement égale à une valeur de consigne préréglée, le volume de fluide excédentaire présent dans le circuit de commande (18) étant le cas échéant évacué vers un éventuel réservoir tampon (20) ou le réservoir d'un tracteur (21).

10. Charrue selon l'une quelconque des revendications 1 à 9, **caractérisée en ce qu'**elle consiste en une charrue portée, réversible ou non, comportant un unique rouleau (3').

11. Charrue selon l'une quelconque des revendications 1 à 9, **caractérisée en ce qu'**elle consiste en une charrue semi-portée comportant deux rouleaux (3'). 1

## Patentansprüche

1. Pflug (1) mit mindestens einer zusätzlichen Vorrichtung (2) zur Bearbeitung des Bodens (S), die einen Satz (3') von Rollmitteln (3) integriert, die eine Walze (3) bilden und mit dem Längsgestell (4) des Pfluges (1) durch mindestens zwei gesteuerte Verbindungsarme (5, 5') verbunden ist, wobei jeder Verbindungsarm (5, 5') einerseits mindestens zwei Schenkel (6 und 6'), die gelenkig montiert und so angeordnet sind, dass sie ein Viereck (5") bilden, das über Winkelgelenke (12, 12') verformbar ist und in einer vertikalen Ebene (PV) in der Bodenbearbeitungsposition (S) des Pfluges 1 angeordnet ist, und andererseits mindestens einen Linearantrieb (7) umfasst, der so konzipiert und angeordnet ist, dass er durch Verschieben der Schenkel (6 und 6') verschiedene Konfigurationen des Vierecks realisieren kann, die jeweiligen verschiedenen Positionen der zusätzlichen Bodenbearbeitungsvorrichtung (2) entsprechen, wobei der oder jeder Antrieb (7) aus mindestens einem doppeltwirkenden Zylinder besteht,
Pflug (1), **dadurch gekennzeichnet ist, dass** der oder jeder doppeltwirkende Zylinder (8) eine Doppelstange (9, 9') und einen Blindraum (10) aufweist, wobei der oder jeder Zylinder (8) zwei Kammern (11, 11') mit gleich großen Arbeitsraum aufweist, die vorzugsweise im Wesentlichen gleich sind, wobei der Antrieb (7) einen Rückverfestigungszylinder für die betreffende Walze (3') bildet, und dadurch, dass der mindestens eine Antrieb (7) jedes Verbindungsarms (5, 5') in dem verformbaren Viereck (5"), das den Arm (5, 5') bildet, montiert ist und sich zwischen den beiden Schenkeln (6, 6') des betreffenden Arms (5, 5') erstreckt.

2. Pflug nach Anspruch 1, **dadurch gekennzeichnet, dass** der mindestens eine Antrieb (7) jedes Verbindungsarms (5, 5') so montiert ist, dass er das Gestell (4) direkt mit einem (6) der Schenkel (6, 6') verbindet, der Teil des betreffenden Verbindungsarms (5, 5') ist.

3. Pflug nach irgendeinem der Ansprüche 1 bis 2, **dadurch gekennzeichnet, dass** der mindestens eine Antrieb (7) jedes Verbindungsarms (5, 5') fest mit einem der Gelenke (12, 12') des verformbaren Vierecks (5") verbunden ist, das den Arm (5, 5') bildet.

4. Pflug nach irgendeinem der Ansprüche 1 bis 3, **dadurch gekennzeichnet, dass** der mindestens eine Antrieb (7) jedes Verbindungsarms (5, 5') an einem seiner Enden mit einem der Gelenke (12, 12') des verformbaren Vierecks (5"), das den Arm bildet, fest verbunden ist, vorzugsweise mit einem der Gelenke (12), die sich auf der Seite des Längsgestells (4) befinden, und an seinem anderen Ende mit dem Schenkel (6) des Vierecks (5"), der nicht von dem oben genannten Gelenk (12) betroffen ist, vorzugsweise auf Seite oder in der Nähe der Walze (3'), vor seinem Gelenk (12') mit der Walze (3').

5. Pflug nach irgendeinem der Ansprüche 1 bis 4, **dadurch gekennzeichnet, dass** die beiden Schenkel (6 und 6') jedes Verbindungsarms (5, 5') an ihren jeweiligen gegenüberliegenden Enden durch Drehgelenke (12, 12') auf der einen Seite mit einem Lager (13) einer Schwenkverbindung (13') mit dem Gestell (4) und auf der gegenüberliegenden Seite mit einem Lager (14) einer Schwenkverbindung (14') mit einem Balken (15), der die Walzmittel (3) trägt, verbunden sind, wobei die Achsen (ALP1, ALP2) der beiden Schwenkverbindungen (13' und 14') und die Achsen (ALR, ALR') der vier Drehgelenke (12, 12') zueinander senkrecht sind.

6. Pflug nach irgendeinem der Ansprüche 1 bis 5, **dadurch gekennzeichnet, dass** die verschiedenen Walzmittel (3), die die Walze(n) (3') bilden, in Form von scheibenförmigen oder ringförmigen Rädern vorliegen, von denen jedes auf einem Balken (15) mit einem Längsversatz zwischen den verschiedenen Rädern (3) montiert ist, und dadurch, dass dieser Balken (15) durch zwei gelenkige und gesteuerte Verbindungsarme (5 und 5') mit dem Gestell (4) verbunden ist, wobei Letzteres so mit den beiden Verbindungsarmen (5 und 5') und dem Balken (15) ein verformbares Viereck bildet, dessen Ausgestaltung durch einen Linearantrieb (17) gesteuert wird.

7. Pflug nach irgendeinem der Ansprüche 1 bis 6, **dadurch gekennzeichnet, dass** er vom Typ Wendepflug ist und dadurch, dass der in jeden Verbindungsarm (5, 5') integrierte Linearantrieb (7) aus einem Betätigungselement besteht, das aus zwei doppeltwirkenden Zylindern (8) jeweils mit Doppelstange gestaltet ist, die entgegengesetzt ausgerichtet sind, im gleichen Gehäuse montiert sind, einen gemeinsamen Blindraum (10) teilen und jeweils zwei Kammern (11, 11') mit gleich großen Arbeitsraum aufweisen, wobei jedes Betätigungselement (7) über die Enden der beiden sichtbaren Stangen (9) der Zylinder (8), die es bilden, mit entsprechenden Verankerungsstellen des betreffenden Verbindungsarms (5, 5') verbunden ist.

8. Pflug nach irgendeinem der Ansprüche 1 bis 7, **dadurch gekennzeichnet, dass** jeder Antrieb (7) vom hydraulischen oder pneumatischen Typ ist und von einem geeigneten Steuerkreis (18) gespeist wird, der ein Regelungsmodul (19) integriert.

9. Pflug nach Anspruch 8, **dadurch gekennzeichnet, dass** das Regelungsmodul (19) so konfiguriert ist, dass es über die gesteuerten Verbindungsarme (5, 5') einen Auflagedruckwert der oder jeder Walze (3') auf den Boden (S) erzeugt, der in einem vorbestimmten Wertebereich liegt, der vorzugsweise im Wesentlichen gleich einem voreingestellten Sollwert ist, wobei das im Steuerkreis (18) vorhandene überschüssige Fluidvolumen gegebenenfalls in einen eventuellen Pufferbehälter (20) oder den Behälter eines Traktors (21) abgeleitet wird.

10. Pflug nach irgendeinem der Ansprüche 1 bis 9, **dadurch gekennzeichnet, dass** er aus einem Anbaupflug, wendbar oder nicht, besteht, der eine einzige Walze (3') aufweist.

11. Pflug nach irgendeinem der Ansprüche 1 bis 9, **dadurch gekennzeichnet, dass** er aus einem Aufsattelpflug mit zwei Walzen (3') besteht.

## Claims

1. Plough (1) comprising at least one additional device (2) for working the soil (S), which includes a rolling means (3) assembly (3') forming a roller and which is connected to the longitudinal frame (4) of the plough (1) by at least two controlled connecting arms (5, 5'), each connecting arm (5, 5') comprising, on one hand, at least two legs (6 and 6') mounted articulated and arranged so as to form a parallelogram (5") that is deformable by means of angle joints (12, 12') and arranged along a vertical plane (PV) in the soil (S) working position of the plough (1), and, on the other hand, at least one linear actuator (7) designed and arranged so as to be able to carry out, by moving the legs (6 and 6'), varied configurations of the parallelogram, corresponding to respective varied positions of the additional soil-working device (2), the or each actuator (7) consisting of at least one double-acting cylinder,
plough (1) **characterized in that** the or each double-acting cylinder (8) has two rods (9, 9') and a blind space (10), the said or each cylinder (8) comprising two chambers (11, 11') with equivalent working sections, preferably substantially identical, the said actuator (7) acting as tamping cylinder for the roller (3') considered, and **in that** the said at least one actuator (7) of each connecting arm (5, 5') is mounted in the deformable parallelogram (5") forming the said arm (5, 5'), and extends between the two legs (6, 6') of the arm (5, 5') considered.

2. Plough according to claim 1, **characterized in that** the said at least one actuator (7) of each connecting arm (5, 5') is mounted so as to connect the frame (4) directly to one (6) of the legs (6, 6') forming part of the connecting arm (5, 5') considered.

3. Plough according to any one of claims 1 to 2, **characterized in that** the said at least one actuator (7) of each connecting arm (5, 5') is rigidly fastened to one of the joints (12, 12') of the deformable parallelogram (5") forming the said arm (5, 5').

4. Plough according to any one of claims 1 to 3, **characterized in that** the said at least one actuator (7) of each connecting arm (5, 5') is rigidly fastened, at one of its ends, to one of the joints (12, 12') of the deformable parallelogram (5") forming the said arm, preferably one of the joints (12) located on the side of the longitudinal frame (4) and, at its other end, to the leg (6) of the parallelogram (5") not concerned by the above-mentioned joint (12), preferably on the side of or near the roller (3'), before its joint (12') with the said roller (3').

5. Plough according to any one of claims 1 to 4, **characterized in that** the two legs (6 and 6') of each connecting arm (5, 5') are connected, at their respective opposite ends, by swivel joints (12, 12'), on one side, to a bearing (13) of a pivot connection (13') with the frame (4) and, on the opposite side, to a bearing (14) of a pivot connection (14') with a beam (15) carrying the rolling means (3), the axes (ALP1, ALP2) of the two pivot connections (13' and 14') and the axes (ALR, ALR') of the four swivel joints (12, 12') being mutually perpendicular.

6. Plough according to any one of claims 1 to 5, **characterized in that** the various rolling means (3) forming the roller(s) (3') consist of disc or ring wheels, each one being mounted on a beam (15) with a longitudinal offset between the various wheels (3), and **in that** this beam (15) is connected by two articulated and controlled connecting arms (5 and 5') to the frame (4), the latter thus forming with the said two connecting arms (5 and 5') and the beam (15), a deformable parallelogram whose conformation is controlled by a linear actuator (17).

7. Plough according to any one of claims 1 to 6, **characterized in that** it is of the reversible plough type and **in that** the linear actuator (7) integrated in each connecting arm (5, 5') consists of an actuating element composed of two double-acting cylinders (8) each with double rod, aligned opposite each other, mounted in the same body, sharing a common blind space (10) and each comprising two chambers (11, 11') with equivalent working sections, each actuating element (7) being connected by the ends of the two apparent rods (9) of the cylinders (8) forming it to corresponding anchoring points of the connecting arm (5, 5') considered.

8. Plough according to any one of claims 1 to 7, **characterized in that** each actuator (7) is of the hydraulic or pneumatic type and is supplied by a suitable control circuit (18) including a regulation module (19).

9. Plough according to claim 8, **characterized in that** the regulation module (19) is configured to generate by means of the controlled connecting arms (5, 5'), a tamping pressure value of the or of each roller (3') on the soil (S) within a predetermined range of values, preferably substantially equal to a preset set value, the volume of excess fluid present in the control circuit (18) being, where applicable, evacuated to the surge tank (20) if present or to the tractor tank (21).

10. Plough according to any one of claims 1 to 9, **characterized in that** it consists of a mounted plough, reversible or not, having a single roller (3').

11. Plough according to any one of claims 1 to 9, **characterized in that** it consists of a semi-mounted plough having two rollers (3').
